**Europäisches Patentamt**

(19) **European Patent Office**

**Office européen des brevets**

(11) Numéro de publication: **0 129 450**
**B1**

(12) **FASCICULE DE BREVET EUROPEEN**

(45) Date de publication du fascicule du brevet:
**14.09.88**

(21) Numéro de dépôt: **84400840.9**

(22) Date de dépôt: **25.04.84**

(51) Int. Cl.⁴: **G 01 N 21/82**, G 01 N 21/25 //
G01N33/80

(54) Procédé et dispositif pour la détection et la quantification d'agglutinats.

(30) Priorité: **02.05.83 FR 8307266**

(43) Date de publication de la demande:
**27.12.84 Bulletin 84/52**

(45) Mention de la délivrance du brevet:
**14.09.88 Bulletin 88/37**

(84) Etats contractants désignés:
**AT BE CH DE GB IT LI LU NL SE**

(56) Documents cités:
**EP - A - 0 046 430**
**US - A - 3 617 222**

(73) Titulaire: **LE MATERIEL BIOMEDICAL Société à
Responsabilité Limitée dite:, 4 rue de Presbourg,
F-75116 Paris (FR)**

(72) Inventeur: **David, Pierre, 47 Chemin des Vaux Mourants,
F-91370 Verrières-le-Buisson (FR)**
Inventeur: **Jarricot, Jean Alain, 36 Résidence "La
Gaillarderie", F-78590 Noisy-le-Roi (FR)**

(74) Mandataire: **Bonnetat, Christian et al, Cabinet PROPI
Conseils 23 rue de Léningrad, F-75008 Paris (FR)**

## Description

La présente invention concerne un procédé et un dispositif pour la détection et la quantification d'agglutinats susceptibles d'être formés, sous l'action d'au moins un réactif, par des particules en suspension dans un liquide.

Elle peut être utilisée chaque fois que l'on a à détecter et à quantifier des agglutinats. Cependant, elle s'applique particulièrement bien en immunohématologie, notamment en vue de la détermination des groupes sanguins. On sait en effet que la détermination des groupes sanguins est liée à la recherche de l'existence dans le sang d'antigènes érythrocytaires. Les réactions immunocytologiques, face à un antigène de groupe spécifique, se traduisent par un phénomène d'agglutination des hématies, (notamment si ces dernières appartiennent à un autre groupe). Ces hématies peuvent former soit des agglutinats uniformes sans hématies libres, soit quelques gros agglutinats, ou bien encore un grand nombre de petits agglutinats.

Quoique la présente invention ne soit pas limitée dans ses applications à l'immunohématologie, elle sera décrite ci-après plus particulièrement en rapport avec cette application particulière.

On connait déjà des dispositifs pour la détection et la quantification, dans des récipients dont au moins les fonds sont transparents, d'agglutinats susceptibles d'être formés, sous l'action d'au moins un réactif liquide, par des particules en suspension dans des doses de liquides à tester se trouvant dans lesdits récipients, ces dispositifs comportant un agencement linéaire d'une pluralité n d'éléments photo-sensibles observant par transparence les fonds desdits récipients contenant les éventuels agglutinats en balayant m lignes sur lesdits fonds desdits récipients, de façon à former nxm points d'observation répartis selon une surface rectangulaire ou carrée occupant la plus grande partie de la surface du fond de chaque récipient.

Dans ces dispositifs connus, pour chaque point d'observation, on compare la transmission de lumière mesurée à un seuil de transmission de lumière prédéterminée et on décide, pour ce point d'observation, qu'il y a agglutination, si la transmission de lumière mesurée est inférieure audit seuil et qu'il n'y a pas agglutination si cette transmission de lumière mesurée est supérieure audit seuil. Un tel seuil peut être fixe et déterminé en fonction de mesures antérieures. Cependant, un tel seuil risque de ne pas être exactement adapté aux mesures en cours, et de ne pas permettre de mesurer et de détecter de faibles niveaux d'agglutination. Une réaction positive sera alors considérée comme négative pour le dispositif.

Pour éviter ce désavantage, on a déjà pensé à déterminer le seuil à partir de la valeur moyenne de la transmission d'un échantillon-témoin ne comportant pas d'agglutinats. Cependant, afin de s'affranchir des variations de transmission entre échantillon-témoin et échantillons de mesure, dues à des différences soit de concentration, soit de tailles des particules, on est en réalité obligé, dans ce cas, de déterminer deux seuils encadrant cette valeur moyenne. Une telle technique est dans le document EP-A-0046430, lequel décrit un procédé et un dispositif tels que définis dans le préambule respectif des revendications 1 et 7. On élimine ainsi les erreurs de qualification et d'interprétation qui seraient dues à de telles différences, puisque l'on considère alors que les valeurs de transmission comprises dans la bande entre les deux seuils correspondent à des particules libres non agglutinées, alors que les valeurs de transmission inférieures et supérieures à ladite bande correspondent respectivement à une agglutination et au fond (vide) de l'image. Toutefois, si elle permet d'éviter certaines erreurs, cette méthode en introduit d'autres, puisque, à cause de la largeur de la bande entre les deux seuils, on risque, dans une mesure, de considérer comme non agglutinées des particules qui, en réalité, présentent une légère agglutination. De plus, un dispositif mettant en œuvre cette méthode est compliqué à cause de la présence de deux seuils.

En outre, que le seuil soit fixe ou lié à la valeur moyenne de la transmission d'un échantillon témoin, les dispositifs connus fonctionnant selon ce principe sont particulièrement peu précis, puisqu'ils considèrent comme agglutinats des phénomènes totalement étrangers, comme des artéfacts, des particules solides (fibrine), des poussières, des micro-caillots, etc. susceptibles d'entraîner une absorption de lumière importante, si ce n'est totale.

La présente invention a pour objet de remédier à ces inconvénients. Elle permet d'obtenir des résultats de grande précision en prenant en compte tous les agglutinats, même les plus faibles, tout en ne nécessitant pour sa mise en œuvre qu'un dispositif particulièrement simple.

A cette fin, selon l'invention, le procédé pour la détection et la quantification, dans des récipients dont au moins les fonds sont transparents, de réactions d'agglutination susceptibles d'être produites, sous l'action d'au moins un réactif liquide, par des particules en suspension dans des zones de liquides à tester se trouvant dans lesdits récipients, un agencement d'une pluralité d'éléments photosensibles observant par transparence les fonds desdits récipients contenant les éventuels agglutinats, de façon à former un ensemble de points de mesure répartis selon une surface rectangulaire ou carrée occupant la plus grande partie de la surface du fond de chaque récipient, procédé selon lequel, pour chaque point de mesure, on compare la transmission de lumière mesurée à un seuil de transmission de lumière qui est lié à la valeur moyenne de la transmission d'une pluralité de points de mesure d'un échantillon-témoin dans lequel il n'y a pas agglutination, de sorte que toute valeur de transmission inférieure à ce seuil pourrait être considérée comme représentative d'une agglutination, caractérisé en ce que, pour chaque récipient contenant le liquide à tester soumis au réactif, on mesure la valeur moyenne de la transmission des points de mesure dont la transmission est supérieure audit seuil, on compare cette valeur moyenne à celle dudit échantillon-témoin et on considère, d'une part, qu'il y a agglutination lorsque, à la fois, cette valeur moyenne de la transmission est supérieure à celle dudit échantillon témoin et il existe des points de mesure dont la transmission est inférieure audit seuil et, d'autre part, qu'il n'y a pas agglutination lorsque, à la fois, cette valeur moyenne n'est pas supérieure à celle dudit échantillon-témoin et il n'existe pas de points de mesure dont la transmission est inférieure audit seuil.

Ainsi, selon l'invention, on caractérise une réaction positive d'agglutination par la coïncidence d'une variation positive de la valeur moyenne de la transmission et de la présence de points à transmission inférieure à la valeur moyenne de l'échantillon-témoin. A l'inverse, une réaction d'agglutination négative est alors caractérisée par l'absence de variation de la valeur moyenne de la transmission et l'absence de points à transmission inférieure à la valeur moyenne de transmission de l'échantillon-témoin. Tout autre type de réaction est alors rejeté.

Grâce à l'invention, on améliore donc considérablement les critères de classification des réactions et il est donc possible de choisir un seuil de transmission aussi bien ajusté que possible.

Dans une forme préférée de mise en œuvre du procédé selon l'invention, pour chaque récipient, outre le comptage des points de mesure dont la transmission est inférieure audit seuil, on effectue le comptage des points dont la transmission est supérieure audit seuil, on somme les transmissions des points dont la transmission est supérieure audit seuil, et on calcule la valeur moyenne de la transmission des points dont la transmission est supérieure audit seuil.

Pour déterminer ledit seuil, on peut observer par transparence, selon une pluralité de points de mesure, le fond d'un récipient qui est identique aux récipients de réactions mais qui contient un échantillon-témoin non sujet à agglutination, effectuer le comptage des points dont la transmission est supérieure à x %, sommer les transmissions des points dont la transmission est supérieure à x %, et calculer la valeur moyenne de la transmission desdits points. Il est alors avantageux, pour obtenir ledit seuil, de déduire de la valeur moyenne ainsi obtenue, un certain pourcentage de transmission, déterminé par l'expérience, et correspondant à des points à faible transmission parasites tels que poussières, artéfacts, taches graisseuses, etc., à l'absorption du fond du récipient, à l'hétérogénéité des éléments photosensibles, etc.

Toutefois, de préférence, pour déterminer ledit seuil, on observe par transparence, selon une pluralité de points de mesure, le fond d'un récipient qui est identique aux récipients de réactions, mais qui contient un échantillon-témoin non sujet à agglutination, on compare la transmission de chaque point de mesure à une référence arbitraire et on compte le nombre de points de mesure pour lesquels la transmission est inférieure à ladite référence. On compare ce nombre de points comptés à un nombre de points prédéterminé par l'expérience et correspondant à des points à faible transmission parasites, puis si ce nombre de points comptés est supérieur audit nombre prédéterminé, on réajuste progressivement la valeur de ladite référence jusqu'à ce que le nombre de points comptés soit inférieur audit nombre de points prédéterminé.

Selon un autre aspect de l'invention, un dispositif pour la détection et la quantification, dans des récipients dont au moins les fonds sont transparents, d'agglutinats susceptibles d'être formés, sous l'action d'au moins un réactif liquide, par des particules en suspension dans des doses de liquides à tester se trouvant dans lesdits récipients, dispositif comportant un agencement d'une pluralité d'éléments photosensibles observant par transparence les fonds desdits récipients contenant les éventuels agglutinats de façon à former un ensemble de points de mesure répartis selon une surface rectangulaire ou carrée occupant la plus grande partie de la surface du fond de chaque récipient, est caractérisé en ce qu'il comporte, en combinaison:

— des moyens de comparaison dont une entrée est reliée auxdits éléments photosensibles, dont l'autre entrée reçoit un signal représentatif d'un seuil de transmission de lumière et dont la sortie est reliée à des moyens de comptage comptant les points de mesure dont la transparence est inférieure audit seuil;

— des moyens de détection de valeur de crête reliés auxdits éléments photosensibles;

— des moyens de sommation recevant le signal de sortie desdits moyens de détection de valeur de crête et sommant les valeurs de crêtes des signaux émis par lesdits éléments photosensibles, lorsque la réponse de ceux-ci correspond à une transmission supérieure audit seuil;

— des moyens de mémorisation de la somme fournie par lesdits moyens de sommation;

— des moyens de comptage des points de mesures, dont la transparence est supérieure audit seuil; et

— un microprocesseur relié auxdits moyens de comptage et auxdits moyens de mémorisation pour calculer, pour chaque récipient, la valeur moyenne de la somme enregistrée dans lesdits moyens de mémorisation, pour comparer cette valeur moyenne calculée à la valeur moyenne correspondante d'un échantillon-témoin et pour décider qu'il y a agglutination lorsque, à la fois, cette valeur moyenne calculée est supérieure à celle dudit échantillon-témoin et il existe des points de mesure dont la transparence est inférieure audit seuil et, d'autre part, qu'il n'y a pas agglutination lorsque, à la fois, cette valeur moyenne calculée n'est pas supérieure à celle dudit échantillon-témoin et il n'existe pas de points de mesure dont la transmission est inférieure audit seuil.

L'agencement d'éléments photosensibles peut être du type barrette de diodes à couplage de charges, désignées généralement par les lettres CCD, DTC ou CCPD. Selon l'invention, dans laquelle on utilise une barrette rectiligne de n dispositifs à couplage de charges, on observe, en vue de la détection des éventuels agglutinats et lors du mouvement relatif de chaque fond transparent du récipient suivant m positions écartées et parallèles de ladite barrette, de façon à former n x m points de mesure répartis selon une surface rectangulaire ou carrée occupant la plus grande partie de la surface dudit fond. Bien entendu, on peut choisir n égal à m et faire en sorte que l'écart entre deux positions d'observation consécutives de la barrette soit égal à l'écart entre deux dispositifs CCD de la barrette. Ainsi, on couvre totalement une surface carrée du fond transparent. Par exemple, la barrette rectiligne comporte 256 photodiodes CCD, ayant chacune une définition de 25 µm l'information vidéo étant numérisée en 256 niveaux de gris, et l'image analysée représente un carré centré sur ledit fond transparent et formé par 256 balayages écartés de 25 µm.

On obtient ainsi, pour l'observation des agglutinats et pour chaque récipient, n x m mesures, réparties en m balayages de n points.

Les figures du dessin annexé feront bien comprendre comment l'invention peut être réalisée.

La figure 1 est une vue d'ensemble en perspective, avec arrachement partiel, d'une installation avec dispositif selon l'invention.

La figure 2 est une vue de dessus simplifiée du dispositif selon l'invention.

La figure 3 est une vue de dessus d'un disque à alvéoles utilisé dans le dispositif selon l'invention.

Les figures 4 et 5 sont des coupes respectivement selon les lignes IV–IV et V–V de la figure 2.

La figure 6 illustre schématiquement le processus de lecture des agglutinats.

La figure 7 donne le schéma synoptique du dispositif de lecture et la quantification du dispositif selon l'invention.

Sur ces figures des références identiques désignent des éléments identiques.

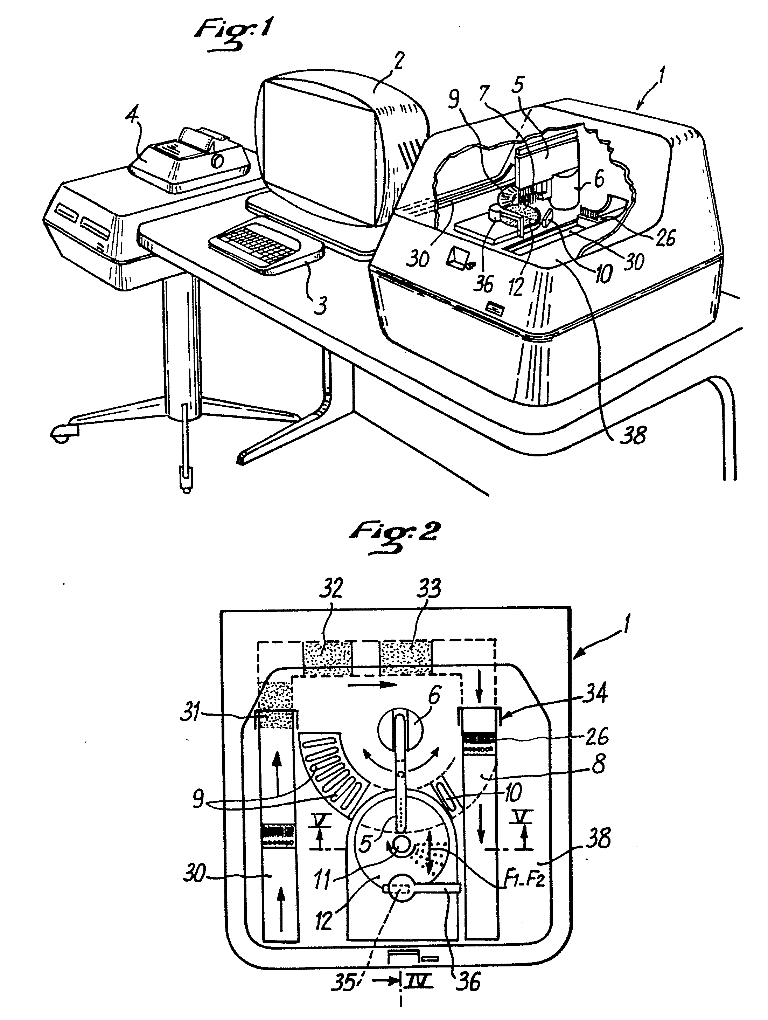

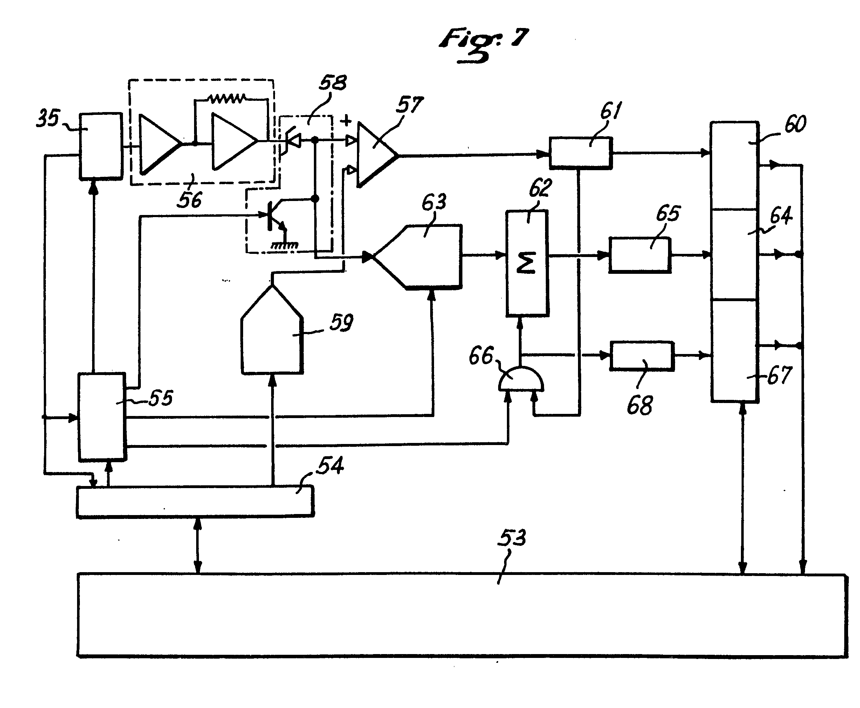

L'installation pour la reconnaissance des groupes sanguins, montrée par la figure 1, comporte un dispositif 1 selon l'invention pour la détection et la quantification d'agglutinats, associé à un dispositif de visualisation 2, à un dispositif de commande 3 et à un dispositif d'impression 4. L'ensemble de l'installation est piloté par un microprocesseur 53 (voir la figure 7).

Comme le montre également la figure 2, le dispositif 1 selon l'invention comporte un bras oscillant horizontal 5 susceptible de tourner autour d'un axe vertical 6 et de coulisser le long de celui-ci. Le bras 5 porte une pluralité de seringues verticales 7, dont les pistons peuvent être actionnés pour aspirer ou refouler un liquide. Lorsque le bras 5 oscille autour de l'axe vertical 6, les seringues 7 balayent une zone annulaire 8.

Dans cette zone annulaire 8 sont prévus des récipients à réactifs 9 dans chacun desquels les seringues verticales 7 peuvent prélever un réactif et un récipient de rinçage 10.

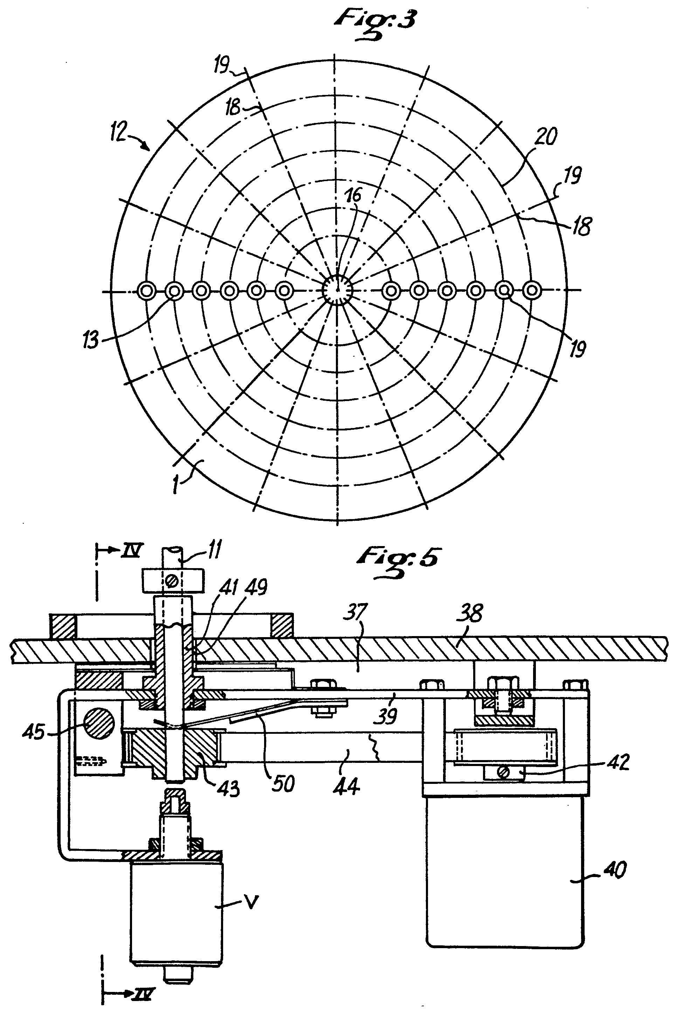

De plus, le dispositif 1 comporte un axe vertical ou arbre rotatif 11 susceptible d'entraîner en rotation un disque 12 de matière transparente dans lequel sont pratiqués des alvéoles 13. Comme le montre la figure 3, le disque 12 est en une matière synthétique transparente et est pourvu en son centre d'un trou 16 pour permettre le passage de l'arbre rotatif d'entraînement 11.

Les alvéoles 13 sont répartis en une pluralité de points 18 se trouvant à l'intersection de rayons 19 et de cercles concentriques 20. A des fins de clarté du dessin, sur la figure 3, seuls quelques alvéoles 13 ont été représentés.

La zone annulaire 8 de balayage des seringues 7 coupe le disque 12 de sorte qu'il est possible de remplir tous les alvéoles 13 disposés sur un rayon 19 du disque 12, en doses de réactifs provenant des réservoirs 9 en introduisant les aiguilles des seringues 7 dans lesdits alvéoles 13. De la même façon, il est possible d'introduire dans les alvéoles 13 des doses de liquides provenant de réservoirs 26 se trouvant dans la zone 8.

Les réservoirs 26 sont introduits dans le dispositif 1 par un convoyeur 30 qui les fait passer successivement à différents postes de traitement 31, 32 et 33, avant de les amener au poste 34 où les seringues 7 du bras 5 peuvent prélever le liquide qu'ils contiennent.

Ainsi, chaque alvéole 13 du disque 12 peut servir de récipient de réaction entre un liquide provenant d'un réservoir 26 et un réactif provenant d'un réservoir 9.

Pour examiner le résultat de l'agglutination qui peut en résulter, le dispositif 1 comporte une barrette 35 de diodes CCD, disposée sous le disque 12 en regard d'un dispositif d'éclairage 36. La barrette 35 et le dispositif d'éclairage 36 sont opposés au bras 5 par rapport à l'axe 11 et la barrette 35 est orthogonale au plan vertical défini par les axes 6 et 11.

La barrette 35 examine par transparence le fond 25 de chaque alvéole 13 selon m observations et mesures décalées chacune d'un pas. Pour que tous les alvéoles 13 d'un rayon 19 du disque 12 puissent être examinés chacun en m pas, l'axe 11 dudit disque est rendu mobile en translation horizontale, orthogonalement à ladite barrette 35 (flèches $F_1$ et $F_2$ de la figure 2 et de la figure 6).

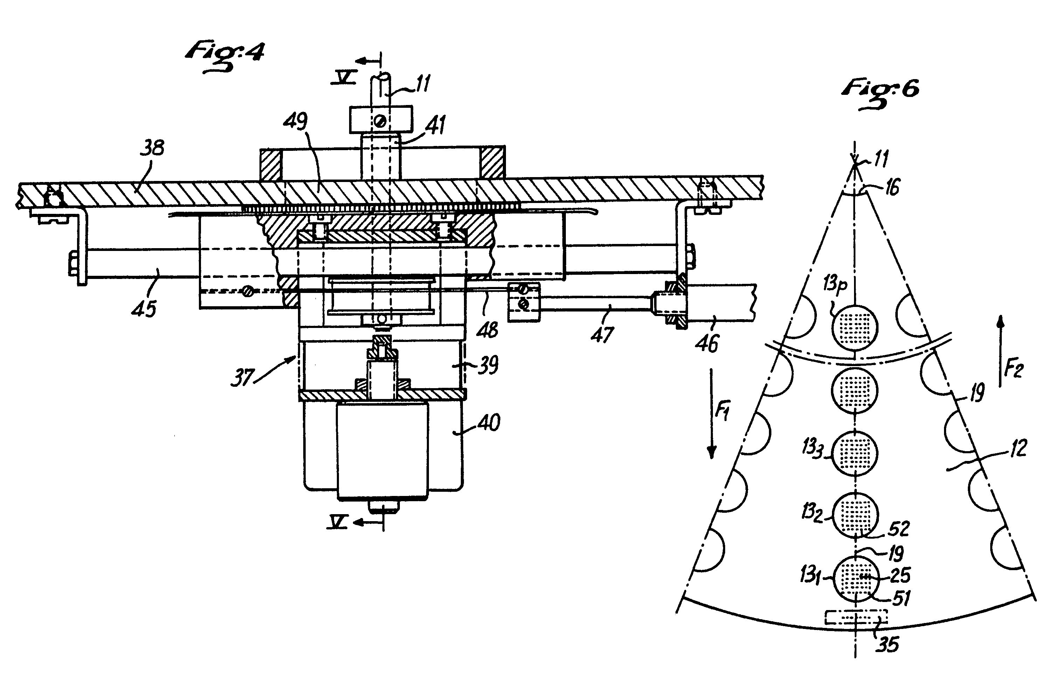

A cette fin, les figures 4 et 5 montrent que l'axe 11 du disque 12 est solidaire d'un chariot 37 mobile par rapport à la plaque de base 38 du dispositif. Ce chariot 37 comporte un bâti portant un moteur 40 et un palier lisse 41 pour l'axe 11. L'arbre de sortie du moteur 40 entraîne en rotation une poulie 42 qui est reliée à une poulie 43 calée sur l'axe 11, par l'intermédiaire d'une courroie crantée 44. Le chariot 37 est guidé en translation par un rail 45 et il se déplace sous l'action d'un vérin 46, dont la tige 47 est reliée au chariot 37 par une tige 48.

Ainsi, l'axe 11 peut coulisser dans une fente 49, de la plaque de base 38, parallèle au rail 45 et orthogonale à la barrette 35 de diodes CCD.

Le chariot 37 peut porter de plus un vibreur V destiné à animer épisodiquement, à l'encontre de l'action d'un ressort 50, l'axe 11 d'un mouvement alternatif parallèlement à son axe, afin d'agiter éventuellement le liquide contenu dans les alvéoles 13 du disque 12.

Quand les alvéoles $13_1$ à $13_p$ du rayon 19 se trouvant dans le plan défini par les axes 6 et 11 doivent être lus par l'agencement 35 pour détecter et quantifier les agglutinations (voir la figure 6), le disque 12 est avancé par le vérin 46 dans le sens de la flèche $F_1$ pour que l'agencement 35 soit à l'aplomb de la limite externe 51 du champ 25 du fond du premier alvéole $13_1$. Puis, pas à pas le vérin est déplacé m fois pour que les n éléments photosensibles de l'agencement 35 examine en n x m points ledit champ 25. Lorsque la lecture du champ 25 de l'alvéole $13_1$ est terminée, le vérin 46 déplace l'axe 11, toujours dans le même sens $F_1$, de façon que la limite externe 52 du champ 25 du fond du second alvéole $13_2$ arrive à l'aplomb des éléments photosensibles de l'agencement 35. Ce second alvéole $13_2$ est lu de façon identique et le processus se continue jusqu'à la lecture complète de l'alvéole $13_p$. Après celle-ci, le vérin 46 ramène l'axe 11 dans sa position initiale (flèche $F_2$).

La figure 7 illustre le dispositif de lecture et de qualification des agglutinats au moyen d'un microprocesseur 53. Celui-ci peut également piloter l'ensemble de l'automatisme de l'installation selon l'invention (mouvements du bras 5, actionnement des seringues 7, ...) selon un processus non décrit ci-après.

Par l'intermédiaire d'un dispositif d'entrée-sortie 54 et d'un séquenceur 55, le micro-processeur 53 commande le dispositif de la figure 7. Celui-ci comporte le réseau 35 de diodes CCD, dont le signal de sortie est amplifié par un amplificateur vidéo 56. A la sortie de l'amplificateur 56 sont disposés un comparateur 57 à deux entrées et un détecteur de valeur de crête 58. L'une des entrées du comparateur 57 reçoit le signal vidéo amplifié sortant de l'amplificateur 56, tandis que l'autre entrée dudit comparateur reçoit un seuil fourni par le microprocesseur 53, par l'intermédiaire d'un convertisseur numérique-analogique 59.

La sortie du comparateur 57 est reliée à un compteur (ou décompteur) 60, par l'intermédiaire d'un dispositif de mise en forme 61.

En outre, la sortie du détecteur de valeur de crête 58 est reliée à un sommateur 62, par l'intermédiaire d'un convertisseur analogique-numérique 63. La sortie dudit sommateur 62 est reliée à un compteur (ou décompteur) 64, par l'intermédiaire d'un dispositif de mise en forme 65.

Le sommateur 62 comporte une entrée de commande, susceptible d'inhiber le fonctionnement dudit sommateur, et commandée par la sortie d'une porte 66 qui reçoit à ses entrées un signal provenant du séquenceur 55 et dont chaque impulsion correspond à un point de mesure et un signal du dispositif de mise en forme 61. De plus, la sortie de la porte 66 est reliée à un compteur (ou décompteur) 67, par l'intermédiaire d'un dispositif de mise en forme 68.

Les compteurs 60, 64 et 67, qui peuvent former une seule unité de comptage sont commandés par le microprocesseur 53, lequel reçoit le contenu de ceux-ci.

Pour pouvoir postérieurement détecter et quantifier des agglutinats correspondant à des réactions ayant lieu dans des alvéoles 13, on commence par étudier une dose liquide échantillon (témoin), de même nature que les doses liquides susceptibles d'agglutination sous l'effet des réactifs, mais dans laquelle on est sûr qu'aucune agglutination n'a lieu.

Pour cela, l'alvéole 13 contenant la dose de l'échantillon témoin est amené en regard de la source lumineuse 36 et de la barrette de diodes 35 et l'on met en marche le processus de balayage en n x m points dudit échantillon-témoin.

Par exemple, le microprocesseur 53, qui coordonne également ledit balayage, impose sur le comparateur 57, par l'intermédiaire du convertisseur 59, un seuil S correspondant à une transmission de lumière égale à x %, x étant par exemple égal à 50. La transmission de chacun des n x m points de mesure de l'échantillon témoin est comparée à ce seuil S et le comparateur 57 bascule, c'est-à-dire émet un signal, à chaque fois que la transmission d'un point de mesure est inférieure audit seuil S, c'est-à-dire à chaque fois que ce point de mesure a une opacité supérieure à x %. Le compteur 60 compte donc le nombre de ces points plus opaques que x %. De plus, le sommateur 62 somme la valeur des opacités des points de mesure, sauf lorsqu'il en est empêché par l'action du dispositif de mise en forme 61, ce qui se produit à chaque fois qu'un point de mesure a une opacité supérieure à x %.

Par suite, le compteur 64 enregistre la somme des opacités des points ayant une opacité inférieure à x %. La sortie de la porte 66 ne valide la sommation du sommateur 62 que si le comparateur 57 n'a pas basculé, c'est-à-dire que la sortie de la porte 66 est représentative du nombre de points dont l'opacité est inférieure à x %. Le compteur 67 enregistre donc le nombre desdits points à opacité inférieure à x %. Des contenus des compteurs 64 et 67, le microprocesseur 53 déduit facilement la valeur moyenne Vm de la transmission des n x m points de mesure de l'échantillon-témoin. Le microprocesseur 53 pourra utiliser cette valeur moyenne Vm comme seuil. Cependant, afin de tenir compte de réponses parasites dues à des effets physiques ou biologiques (hétérogénéité des diodes 35, transmission du fond des alvéoles, poussières, artefacts, etc.), il est préférable que le microprocesseur adopte pour seuil Sx la valeur moyenne Vm corrigée par soustraction d'un certain pourcentage de transmission, correspondant à ces effets et déterminé par expérience.

Selon une variante plus fine du processus de calcul d'un tel seuil Sx, le microprocesseur 53 peut mettre en œuvre une méthode itérative. Par exemple, comme précédemment, on applique au comparateur 57 un seuil arbitraire de x % et on compte le nombre des basculements du comparateur 57. Ce nombre de basculements est transmis au microprocesseur 53 qui réajuste automatiquement la valeur du seuil, jusqu'à ce que le nombre des basculements comptés se rapproche le plus possible du pourcentage prédéterminé du nombre total des points de mesure lus, ce pourcentage, comme précédemment, étant déterminé par expérience et correspondant aux réponses parasites.

Quel que soit le mode de détermination du seuil Sx, celui-ci est ensuite utilisé pour des mesures sur doses liquides soumises à des réactifs. Pour cela, on examine les différents alvéoles 13 contenant une dose liquide du même type que l'échantillon et le microprocesseur 53 applique sur l'entrée correspondante du comparateur 57 le seuil Sx correspondant. Aussi, pour chacun des n x m points de mesure d'un alvéole, de la façon indiquée ci-dessus, le compteur 60 emmagasine le nombre des points correspondant à des agglutinats, le compteur 64 emmagasine la somme des intensités des points ne correspondant pas à des agglutinats et le compteur 67 emmagasine le nombre de points ne correspondant pas à des agglutinats.

A partir des mesures stockées dans les trois compteurs 60, 64 et 67, le microprocesseur 53 calcule la valeur moyenne de transmission des points non agglutinés (par division des contenus des compteurs 64 et 67). Il compare cette valeur moyenne de transmission à celle de l'échantillon-témoin et dans le cas où, simultanément, il constate que le résultat de cette comparaison montre que cette valeur moyenne est supérieure à celle des points de l'échantillon-témoin et que le compteur 60 contient des points agglutinés, il décide qu'il y a bien agglutination.

Bien entendu, en fonction de l'intensité de cette agglutination, il peut répertorier celle-ci dans les différentes classes usuelles en microbiologie.

De plus, lorsque le microprocesseur 53 constate simultanément que la valeur moyenne de transmission calculée n'est pas supérieure à celle de l'échantillon témoin et que le compteur 60 ne contient pas de points agglutinés, il décide qu'il n'y a pas agglutination.

## Revendications

1. Procédé pour la détection et la quantification, dans des récipients dont au moins les fonds sont transparents, de réactions d'agglutinations susceptibles d'être produites, sous l'action d'au moins un réactif liquide, par des particules en suspension dans des doses de liquides à tester se trouvant dans lesdits récipients, un agencement d'une pluralité d'éléments photosensibles observant par transparence les fonds desdits récipients contenant les éventuels agglutinats, de façon à former un ensemble de points de mesure, répartis selon une surface rectangulaire ou carrée occupant la plus grande partie de la surface du fond de chaque récipient, procédé selon lequel pour chaque point de mesure, on compare la transmission de lumière mesurée à un seuil de transmission de lumière qui est lié à la valeur moyenne de la transmission d'une pluralité de points de mesure d'un échantillon-témoin dans lequel il n'y a pas agglutination, de sorte que toute valeur de transmission inférieure à ce seuil pourrait être considérée comme représentative d'une agglutination, caractérisé en ce que, pour chaque récipient contenant le liquide à tester soumis au réactif, on mesure la valeur moyenne de la transmission des points de mesure dont la transmission est supérieure audit seuil, on compare cette valeur moyenne à celle dudit échantillon-témoin et on considère, d'une part, qu'il y a agglutination lorsque, à la fois, cette valeur moyenne de la transmission est supérieure à celle dudit échantillon-témoin et il existe des points de mesure dont la transmission est inférieure audit seuil et, d'autre part, qu'il n'y a pas agglutination lorsque, à la fois, cette valeur moyenne n'est pas supérieure à celle dudit échantillon-témoin et il n'existe pas de points de mesure dont la transmission est inférieure audit seuil.

2. Procédé selon la revendication 1, caractérisé en ce que, on effectue le comptage des points dont la transmission est supérieure audit seuil on somme les transmissions des points dont la transmission est supérieure audit seuil, et on calcule la valeur moyenne de la transmission des points dont la transmission est supérieure audit seuil.

3. Procédé selon l'une des revendications 1 ou 2, caractérisé en ce que, pour déterminer ledit seuil, on observe par transparence, selon une pluralité de points de mesure, le fond d'un récipient qui est identique aux récipients de réactions mais qui contient un échantillon témoin non sujet à agglutination, on effectue le comptage des points dont la transmission est supérieure à un pourcentage déterminé x %, on somme les transmissions des points dont la transmission est supérieure à x %, et on calcule la valeur moyenne de la transmission desdits points.

4. Procédé selon la revendication 3, caractérisé en ce que, pour obtenir ledit seuil, on déduit de la valeur moyenne ainsi obtenue, un certain pourcentage de transmission, déterminé par l'expérience et correspondant à des points à faible transmission parasites.

5. Procédé selon l'une des revendications 1 ou 2, caractérisé en ce que, pour déterminer ledit seuil, on observe par transparence, selon une pluralité de points de mesure, le fond d'un récipient qui est identique aux récipients de réactions, mais qui contient un échantillon témoin non sujet à agglutination, on compare la transmission de chaque point de mesure à une référence arbitraire et on compte le nombre de points de mesure pour lesquels la transmission est inférieure à ladite référence, on compare ce nombre de points comptés à un nombre de points à faible transmission parasites, puis si ce nombre de points comptés est supérieur audit nombre prédéterminé, on réajuste progressivement la valeur de ladite référence jusqu'à ce que le nombre de points comptés soit inférieur audit nombre de points prédéterminé.

6. Procédé selon l'une des revendications 1 à 5, caractérisé en ce qu'on effectue le comptage des points de mesure dont la transmission est inférieure audit seuil.

7. Dispositif pour la détection et la quantification, dans des récipients (13) dont au moins les fonds sont transparents, d'agglutinats susceptibles d'être formés, sous l'action d'au moins un réactif liquide (9), par des particules en suspension dans des doses de liquides (26) à tester se trouvant dans lesdits récipients (13), dispositif comportant un agencement d'une pluralité d'éléments photosensibles (35) observant par transparence les fonds desdits récipients (13) contenant les éventuels agglutinats de façon à former un ensemble de points de mesure répartis selon une surface rectangulaire ou carrée occupant la plus grande partie de la surface du fond de chaque récipient (13), caractérisé en ce qu'il comporte, en combinaison:

— des moyens de comparaison (57) dont une entrée est reliée auxdits éléments photosensibles (35), dont l'autre entrée reçoit un signal représentatif d'un seuil de transmission de lumière et dont la sortie est reliée à des moyens de comptage (60) comptant les points de mesure dont la transparence est inférieure audit seuil;

— des moyens (58) de détection de valeur de crête reliés auxdits éléments photosensibles (35);

— des moyens de sommation (62) recevant le signal de sortie desdits moyens (58) de détection de valeur de crête et sommant les valeurs de crêtes des signaux émis par lesdits éléments photosensibles (35) lorsque la réponse de ceux-ci correspond à une transmission supérieure audit seuil;

— des moyens de mémorisation (64) de la somme fournie par lesdits moyens de sommation (62);

— des moyens de comptage (67) des points de mesures et dont la transparence est supérieure audit seuil; et

— un microprocesseur (53) relié auxdits moyens de comptage (60 et 67) et auxdits moyens de mémorisation (64) pour calculer, pour chaque récipient (13), la valeur moyenne de la somme enregistrée dans lesdits moyens de mémorisation (64), pour comparer cette valeur moyenne calculée à la valeur moyenne correspondante d'un échantillon-témoin et pour décider qu'il y a agglutination lorsque, à la fois, cette valeur moyenne calculée est supérieure à celle dudit échantillon-témoin et il existe des points de mesure dont la transparence est inférieure audit seuil et, d'autre part, qu'il n'y a pas agglutination lorsque, à la fois, cette valeur moyenne calculée n'est pas supérieure à celle dudit échantillon-témoin et il n'existe pas de points de mesure dont la transmission est inférieure audit seuil.

**Claims**

1. Process for the detection and quantification, in recipients of which at least the bottoms are transparent, of reactions of agglutinations capable of being produced, under the action of at least one liquid reagent, by particles in suspension in doses of liquids to be tested contained in said recipients, an arrangement of a plurality of photosensitive elements observing by transparency the bottoms of said recipients containing the possible agglutinates, so as to form a set of points of measurement distributed over a rectangular of square surface occupying the greater part of the surface of the bottom of each recipient, process whereby, for each point of measurement, the transmission of light measured is compared with a light transmission threshold which is connected with the mean value of the transmission of a plurality of points of measurement of a reference sample in which there is no agglutination, with the result that any value of transmission less than this threshold might be considered as representative of an agglutination, characterized in that it comprises the following steps, for each recipient containing the liquid to be tested submitted to the reagent, of:

— measuring the mean value of the transmission of the points of measurement whose transmission is greater than said threshold,

— comparing this mean value with that of said reference sample,

— and considering, on the one hand, that there is agglutination when, at the same time, this mean value of the transmission is higher than that of said reference sample and when there exist points of measurement whose transmission is less than said threshold, and, on the other hand, that there is no agglutination when, at the same time, this mean value is not greater than that of said reference sample and when there exist no points of measurement whose transmission is less than said threshold.

2. Process according to claim 1, characterized in that the points whose transmission is higher than said threshold are counted, the transmissions of the points whose transmission is higher than said threshold are summed, and the mean value of the transmission of the points whose transmission is higher than said threshold is calculated.

3. Process according to one of claims 1 or 2, characterized in that in order to determine said threshold, the bottom of a recipient which is identical to the reaction recipients but which contains a reference sample not subject to agglutination is observed by transparency at a plurality of points of measurement, the points whose transmission is higher than a determined percentage x % are counted, the transmissions of the points whose transmission is higher than x % are summed, and the mean value of the transmission of said points is calculated.

4. Process according to claim 3, characterized in that, in order to obtain said threshold, a certain percentage of transmission, determined by experience, and corresponding to parasitic points with weak transmission is deducted from the mean value thus obtained.

5. Process according to one of claims 1 or 2, characterized in that, in order to determine said threshold, the bottom of a recipient which is identical to the reaction recipients but which contains a reference sample not subject to agglutination is observed by transparency, at a plurality of points of measurement, the transmission of each point of measurement is compared with an arbitrary reference and the number of points of measurement for which the transmission is less than said reference is counted, this number of points counted is compared with a number of parasitic points with weak transmission, then if this number of points counted is greater than said predetermined number, the value of said reference is progressively readjusted until the number of points counted is less than said predetermined number of points.

6. Process according to one of claims 1 to 5, characterized in that the points of measurement whose transmission is less than said threshold are counted.

7. Device for the detection and quantification, in recipients (13) of which at least the bottoms are transparent, of agglutinates capable of being formed, under the action of at least one liquid reagent (9), by particles in suspension in doses of liquids (26) to be tested contained in said recipients (13), device comprising an arrangement of a plurality of photosensitive elements (35) observing by transparency the bottoms of said recipients (13) containing the possible agglutinates so as to form a set of points of measurement distributed over a rectangular or square surface occupying the greater part of the surface of the bottom of each recipient (13), characterized in that it comprises, in combination:

— comparison means (57) of which one input is connected to said photosensitive elements (35), of which the other input receives a signal representative of a light transmission threshold and of which the output is connected to counting means (60) counting the points of measurement of which the transparency is less than said threshold;

— peak value detection means (58) connected to said photosensitive elements (35);

— summation means (62) receiving the output signal from said peak value detection means (58) and summing the peak values of the signals emitted by said photosensitive elements (35) when the response of the latter corresponds to a transmission greater than said threshold;

— means (64) for memorizing the sum furnished by said summation means (62);

— means (67) for counting the points of measurement and whose transparency is greater than said threshold; and

— a microprocessor (53) connected to said counting means (60, 67) and to said memorizing means (64) in order to calculate, for each recipient (13), the mean value of the sum recorded in said memorizing means (64), to compare this calculated mean value with the corresponding mean value of a reference sample and to decide that there is agglutination when, at the same time, this calculated mean value is higher than that of said reference sample and when there exist points of measurement whose transparency is less than said threshold and, on the other hand, that there is no agglutination when, at the same time, this calculated mean value is not greater than that of said reference sample and when there exist no points of measurement whose transmission is less than said threshold.

**Patentansprüche**

1. Verfahren für den Nachweis und die quantitative Erfassung in Gefässen, von denen wenigstens die Böden transparent sind, von Agglutinationsreaktionen, die unter Wirkung wenigstens eines flüssigen Reaktionsmittels durch Schwebeteilchen in zu testenden, sich in den Gefässen befindenden Flüssigkeitsdosen gebildet werden können, wobei eine Anordnung einer Vielzahl von fotoempfindlichen Elementen durch die Böden der die eventuellen Agglutinate enthaltenden Gefässe beobachtet, sodass eine Gesamtheit von Messpunkten auf einer rechteckigen oder quadratischen Fläche gebildet wird, die den grössten Teil der Bodenfläche jedes Gefässes einnimmt, wobei für jeden Messpunkt die gemessene Lichttransmission mit einer Schwelle der Lichttransmission verglichen wird, die an den Mittelwert der Transmission einer Vielzahl von Messpunkten einer Vergleichsprobe ohne Agglutination gebunden ist, sodass jeder Transmissionswert kleiner als diese Schwelle als repräsentativ für eine Agglutination angesehen werden kann, dadurch gekennzeichnet, dass für jedes, die zu testende, einem Reaktionsmittel ausgesetzte Flüssigkeit enthaltendes Gefäss der Mittelwert der Transmission von Messpunkten gemessen wird, deren Transmission grösser als die Schwelle ist, dass dieser Mittelwert mit dem der Vergleichsprobe verglichen wird, und dass einerseits als Agglutination angesehen wird, wenn gleichzeitig dieser Mittelwert der Transmission grösser ist als der für die Vergleichsprobe und Messpunkte existieren, deren Transmission kleiner als die Schwelle ist, und dass andererseits als keine Agglutination angesehen wird, wenn gleichzeitig dieser Mittelwert nicht grösser ist als der für die Vergleichsprobe und keine Messpunkte existieren, deren Transmission kleiner als die Schwelle ist.

2. Verfahren nach Anspruch 1, dadurch gekennzeichnet, dass die Zählung der Punkte bewirkt wird, deren Transmission grösser als die Schwelle ist, dass die Transmissionen der Punkte aufsummiert werden, deren Transmission grösser als die Schwelle ist, und dass der Mittelwert der Transmission der Punkte berechnet wird, deren Transmission grösser als die Schwelle ist.

3. Verfahren nach einem der Ansprüche 1 oder 2, dadurch gekennzeichnet, dass um diese Schwelle zu bestimmen, an einer Vielzahl von Messpunkten durch den Boden eines Gefässes beobachtet wird, das mit den Reaktionsgefässen identisch ist, das aber eine nicht der Agglutination unterliegende Vergleichsprobe enthält, dass die Zählung der Punkte bewirkt wird, deren Transmission grösser als ein bestimmter Prozentsatz x % ist, dass die Transmissionen der Punkte aufsummiert werden, deren Transmission grösser als x % ist, und dass der Mittelwert der Transmission dieser Punkte berechnet wird.

4. Verfahren nach Anspruch 3, dadurch gekennzeichnet, dass, um diese Schwelle zu erhalten, vom so ermittelten Mittelwert ein gewisser, aus der Erfahrung bestimmter Prozentsatz für die Transmission abgezogen wird, der Störpunkten mit schwacher Transmission entspricht.

5. Verfahren nach einem der Ansprüche 1 oder 2, dadurch gekennzeichnet, dass zur Bestimmung dieser Schwelle an einer Vielzahl von Messpunkten durch den Boden eines Gefässes beobachtet wird, das mit den Reaktionsgefässen identisch ist, das aber eine nicht der Agglutination unterliegende Vergleichsprobe enthält, die Transmission für jeden Messpunkt mit einem willkürlichen Bezugswert verglichen wird, und dass die Anzahl der Messpunkte gezählt wird, für die die Transmission kleiner als der Bezugswert ist, dass diese Anzahl gezählter Punkte mit einer Anzahl von Störpunkten verglichen wird, dass dann, falls diese Anzahl gezählter Punkte grösser als die vorherbestimmte Anzahl ist, der Bezugswert schrittweise nachgestellt wird, bis die Anzahl der gezählten Punkte kleiner als die vorherbestimmte Anzahl von Punkten ist.

6. Verfahren nach einem der Ansprüche 1 bis 5, dadurch gekennzeichnet, dass die Zählung der Messpunkte bewirkt wird, deren Transmission kleiner als die Schwelle ist.

7. Vorrichtung für den Nachweis und die quantitative Erfassung in Gefässen (13), von denen wenigstens die Böden transparent sind, von Agglutinaten, die unter Wirkung wenigstens eines flüssigen Reaktionsmittels (9) durch Schwebeteilchen in zu testenden, sich in den Gefässen (13) befindenden Flüssigkeitsdosen (26) gebildet werden können, wobei die Vorrichtung eine Anordnung (35) einer Vielzahl von fotoempfindlichen Elementen umfasst, die durch die Böden der die eventuellen Agglutinate enthaltenden Gefässe (13) beobachtet, sodass eine Gesamtheit von Messpunkten auf einer rechteckigen oder quadratischen Fläche gebildet wird, die den grössten Teil der Bodenfläche jedes Gefässes (13) einnimmt, dadurch gekennzeichnet, dass sie in Kombination enthält:

– Mittel zum Vergleichen (57), deren einer Eingang mit den fotoempfindlichen Elementen (35) verbunden ist, deren anderer Eingang ein für die Schwelle der Lichttransmission repräsentatives Signal empfängt, und deren Ausgang mit Mitteln zum Zählen (60) verbunden ist, die die Messpunkte zählen, deren Transmission kleiner als die Schwelle ist;

– mit den fotoempfindlichen Elementen (35) verbundene Mittel zum Erfassen des Spitzenwerts (58);

– Mittel zum Aufsummieren (62), die das Ausgangssignal der Mittel zum Erfassen des Spitzenwerts (58) empfangen und die die Spitzenwerte der von den fotoempfindlichen Elementen (35) emittierten Signale aufsummieren, wenn deren Ansprechen einer Transmission grösser als der Schwelle entspricht;

– Mittel zum Abspeichern (64) der von den Mitteln zum Aufsummieren (62) gelieferten Summe;

– Mittel zum Zählen (67) der Messpunkte, deren Transparenz grösser als die Schwelle ist;

– einen mit den Mitteln zum Zählen (60 und 67) und den Mitteln zum Abspeichern (64) verbundenen Mikroprozessor (53) zum Berechnen des Mittelwerts der in den Mitteln zum Abspeichern (64) für jedes Gefäss (13) registrierten Summe, zum Vergleichen dieses Mittelwerts mit dem einer Vergleichsprobe entsprechenden Mittelwert und zum Entscheiden, dass eine Agglutination vorliegt, wenn gleichzeitig dieser berechnete Mittelwert grösser als der der Vergleichsprobe ist und Messpunkte existieren, deren Transparenz kleiner als die Schwelle ist, und dass andererseits keine Agglutination vorliegt, wenn gleichzeitig dieser berechnete Mittelwert nicht grösser als der der Vergleichsprobe ist und keine Messpunkte existieren, deren Transparenz kleiner als die Schwelle ist.

*Fig. 1*

*Fig. 2*

0 129 450

*Fig.3*

*Fig.5*

13

*Fig:4*

*Fig:6*

0 129 450

Fig. 7